# FASCICULE DE BREVET EUROPEEN

(11) **EP 0 366 579 B1**
(45) Date de publication et mention de la délivrance du brevet: **20.04.1994**
(21) Numéro de dépôt: 89440114.0
(22) Date de dépôt: 20.10.1989
(51) Int. Cl.: D06F 58/16, F28F 9/10, F28F 9/04, F16L 13/14, F16L 25/00

(54) **Radiateur chauffe-linge**
Kombinierte Heizröhre und Trockenständer für Wäsche
Combined radiator and clothes drier

(30) Priorité: 21.10.1988 FR 8814088
(43) Date de publication de la demande: 02.05.1990
(73) Titulaire: SIMILOR S.A., CH-1227 Carouge-Genève (CH)
(72) Inventeur: Bronner, Jean-Pierre, F-67150 Erstein (FR)
(74) Mandataire: KIRKER & Cie S.A.

(56) Documents cités:
- CH-A- 621 622
- DE-A- 3 508 106
- FR-A- 1 258 044
- FR-A- 1 284 588
- FR-A- 2 130 864
- GB-A- 666 863
- GB-A- 1 042 996
- US-A- 1 389 997
- US-A- 2 455 180
- US-A- 3 689 112
- US-A- 3 781 040

## Description

La présente invention concerne le domaine des équipements domestiques, en particulier des équipements de salles d'eau ou de bain, notamment des éléments de chauffage équipant ces dernières, et a pour objet un radiateur chauffe-linge.

Jusqu'à une période récente, les salles d'eau ou de bain étaient généralement équipées d'un radiateur de confort destiné à maintenir ces salles à une température agréable pour une personne sortant d'un bain ou d'une douche.

Ces radiateurs n'étaient pas destinés à un chauffage éventuel des serviettes utilisées ensuite ou du linge de corps. Ces serviettes ou le linge de corps pouvaient être chauffés par disposition au-dessus desdits radiateurs ou par accrochage devant ces derniers au moyen d'éléments accessoires de suspension du type sèche-linge accrochés devant ou sur lesdits radiateurs.

Pour obvier à ces inconvénients, il a été proposé différents types de radiateurs électriques à bain d'huile ou de radiateurs à circulation d'eau présentant une constitution générale d'échelle et permettant un accrochage sur les barreaux de ladite échelle des serviettes ou du linge à chauffer (voir par example les documents FR-A-2130864 et GB-A-666863).

Dans le cas d'utilisation de radiateurs à circulation d'eau, ces derniers sont, cependant, généralement constitués en tubes de fer soudés entre eux et ne peuvent donc pas être raccordés à une installation d'eau chaude sanitaire. Le défaut d'un tel raccordement présente l'inconvénient de nécessiter un fonctionnement continu dudit radiateur pour disposer de la chaleur nécessaire au chauffage du linge concerné, ceci même en plein été. Un tel chauffage est réalisé, soit par un branchement d'un circuit spécifique de chauffage des salles d'eau, totalement indépendant du circuit de chauffage, ce qui entraîne un coût supplémentaire d'installation, soit par un fonctionnement continu de l'ensemble de l'installation de chauffage, les radiateurs dont le fonctionnement est inutile étant alors mis hors circuit individuellement.

En outre, la réalisation de radiateurs en tubes de fer entraîne des problèmes d'état de surfaces desdits radiateurs, en particulier au niveau des soudures, ne permettant pas l'obtention, après traitement galvanique, d'oxydation ou revêtement par peinture ou par résine, de finis acceptables du point de vue de l'esthétique.

La présente invention a pour but de pallier ces inconvénients.

Elle a, en effet, pour objet, un radiateur chauffe-linge caractérisé en ce qu'il est alimenté en tout fluide caloporteur et en ce qu'il est essentiellement constitué par des tubes en laiton, ou autres matériaux compatibles avec tout fluide caloporteur, montés sans soudure entre des longerons creux en laiton ou autres matériaux compatibles avec tout fluide caloporteur.

L'invention sera mieux comprise grâce à la description ci-après, qui se rapporte à un mode de réalisation préféré, donné à titre d'exemple non limitatif, et expliqué avec référence au dessin schématique annexé, dans lequel :
la figure 1 est une vue en perspective d'un radiateur chauffe-linge conforme à l'invention, et
la figure 2 est une vue partielle en coupe, à plus grande échelle, représentant l'assemblage entre les tubes et les longerons ainsi que, dans une représentation décalée en rotation par rapport à l'axe horizontal ou vertical le branchement d'une alimentation de fluide caloporteur et la fixation d'un élément de support.

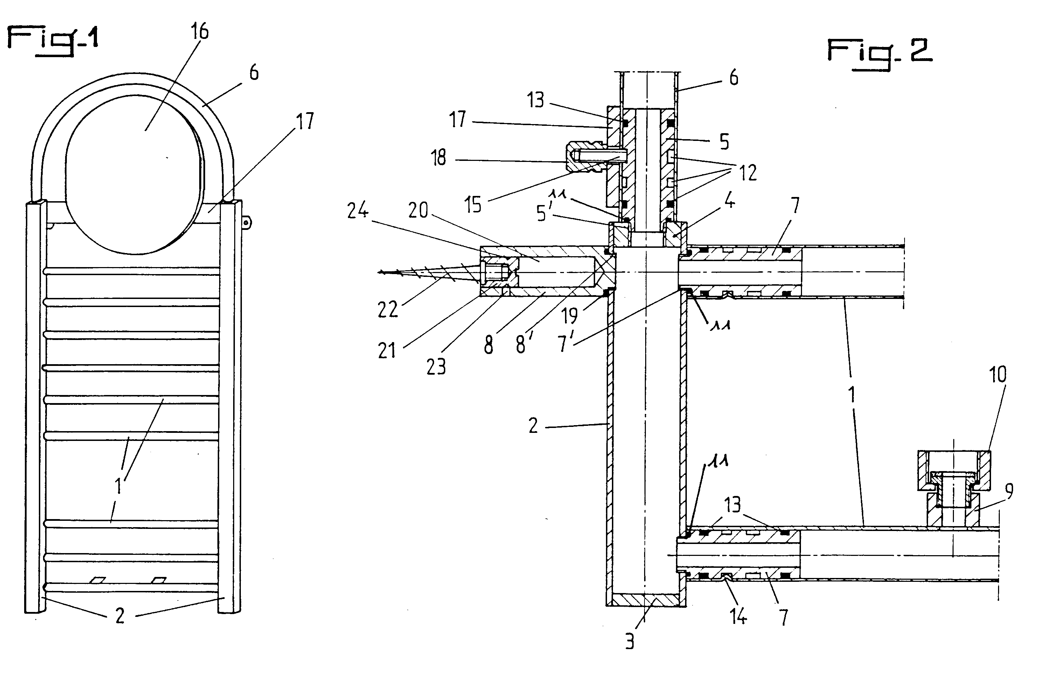

Conformément à l'invention, et comme le montrent les figures 1 et 2 du dessin annexé, le radiateur chauffe-linge est caractérisé en ce qu'il est alimenté en tout fluide caloporteur et en ce qu'il est essentiellement constitué par des tubes en laiton 1, ou autres matériaux compatibles avec tout fluide caloporteur, montés sans soudure entre des longerons creux en laiton 2 ou autres matériaux compatibles avec tout fluide caloporteur.

Les longerons 2 sont avantageusement des tubes fermés à leurs extrémités par des bouchons, simple 3 ou de raccordement 4 muni d'une douille 5 de montage d'un autre tube de chauffage 6, et sont pourvus sur leur face ou sur leur génératrice opposée, de douilles 7 de montage par emmanchement des tubes en laiton 1 ou autres, des éléments de support 8 pour une fixation murale étant également montés sur les longerons 2 sur leur face ou leur génératrice tournée vers le mur.

Le départ et l'arrivée de fluide caloporteur du radiateur conforme à l'invention sont réalisés par l'intermédiaire de pièces 9 rapportées sur un perçage de deux tubes 1 ou des deux longerons 2 et soudées sur ces derniers, ces pièces 9 étant munies chacune d'un ensemble 10 de raccordement sur une conduite d'eau chaude sanitaire ou tout autre fluide caloporteur.

Les douilles 5 et 7 sont avantageusement fixées chacune par vissage d'une portion filetée de diamètre réduit 5′, 7′ dans un taraudage correspondant des bouchons 4 ou des longerons 2, avec interposition d'un joint torique 11, ce vissage étant complété par un collage.

Les douilles 5 et 7 présentent sur leur partie en saillie des bouchons 4 ou des longerons 2, des gorges parallèles 12 permettant, d'une part, le logement de joints toriques 13 d'étanchéité entre les tubes 6 ou 1 et les douilles 5 ou 7 et, d'autre part, un serrage desdits tubes 6 ou 1 sur lesdites douilles par réalisation d'un emboutissage 14 au niveau d'une gorge 12 ou par introduction d'une tige filetée 15, traversant le tube 6 ou les tubes 1, dans une gorge 12. Les emboutissages 14 ou les tiges filetées 15 permettent d'assurer le montage à emmanchement serré des tubes 6 ou 1 sur les douilles 5 ou 7 contre une désolidarisation sous l'effet de la pression de l'eau dans le radiateur.

Les tiges filetées 15 de maintien du ou des tubes 6 sur les douilles 5 sont destinées à la fixation d'éléments annexes 16, tels que miroir ou grille sèche-linge, etc..., au moyen de pattes 17, serrés par des boutons 18 (figures 1 et 2) ou autres dispositifs de fixation.

Les éléments de support 8 pour une fixation murale sont avantageusement constitués sous forme d'un élément cylindrique muni d'une portion filetée de moindre section 8′ vissée, avec interposition d'un joint torique 19, dans un perçage taraudé correspondant du longeron 2, cet assemblage par vissage étant bloqué par collage, et pourvu à son extrémité libre d'un perçage borgne 20 de réception d'un insert 21 fixé sur une vis d'ancrage 22 et solidarisé avec l'élément 8 par l'intermédiaire d'une vis pointeau 23 coopérant avec une rainure circulaire 24 dudit insert 21 (figure 2).

Le tube 6 peut avantageusement être cintré afin de relier les extrémités des longerons 2 par emmanchement sur les douilles 5 correspondantes.

Les longerons 2 peuvent présenter une section quelconque et être de longueur variable en fonction des besoins de chauffage ou de l'encombrement maximum possible. De même, les tubes 1, qui sont généralement de section ronde, peuvent présenter des formes et des longueurs variables.

Les tubes 1 peuvent recevoir toute forme de décoration, par exemple par traitement galvanique sous forme d'un revêtement de chrome, de nickel brillant, de vermeil, d'or, etc... , par traitement d'oxydation pour l'obtention d'un aspect vieux bronze, nickel mat, etc.., par un revêtement de résine époxy ou encore par un revêtement de peinture. Des tubes 1 de décoration différente peuvent être combinés pour la réalisation d'un même radiateur chauffe-linge, leur montage définitif sur les longerons 2 étant effectué après décoration des tubes.

Selon une caractéristique de l'invention, les pièces constitutives du radiateur sont assemblées après traitement de surface.

Conformément à une autre caractéristique de l'invention, les pièces constitutives du radiateur peuvent être des pièces ayant subi des traitements différents ou présentant des couleurs différentes.

Les éléments constitutifs du radiateur conforme à l'invention peuvent être facilement traités, en particulier concernant leur état de surface, du fait qu'ils se présentent indépendamment les uns des autres.

Grâce à l'invention, il est possible de réaliser des radiateurs chauffe-linge présentant une très grande variété de décor des tubes et des longerons et une grande flexibilité dimensionnelle.

De tels radiateurs sont utilisables aussi bien dans des salles d'eau que dans toutes autres pièces d'une habitation ou dans des locaux professionnels, publics, sportifs et autres, du fait que leurs éléments constitutifs sont assemblés après décoration de surface.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Radiateur chauffe-linge, essentiellement constitué par des tubes (1) montés entre des longerons creux (2), alimenté en tout fluide caloporteur, en particulier en eau chaude sanitaire, les tubes (1) et les longerons creux (2) étant en laiton, ou autres matériaux compatibles avec tout fluide caloporteur, notamment sanitaire, le départ et l'arrivée de fluide caloporteur étant réalisés par l'intermédiaire de pièces (9) rapportées chacune sur un perçage de deux tubes (1) ou des deux longerons (2) et soudées sur ces derniers, ces pièces (9) étant munies chacune d'un ensemble (10) de raccordement sur une conduite d'eau chaude sanitaire ou tout autre fluide caloporteur, caractérisé en ce que les tubes (1) sont montés sans soudure entre les longerons creux (2), en ce que les longerons (2) sont avantageusement des tubes fermés à leurs extrémités par des bouchons, simple (3) ou de raccordement (4) muni d'une douille (5) de montage d'un autre tube de chauffage (6) reliant les extrémités des longerons (2), et sont pourvus sur leurs faces ou sur leurs génératrices opposées, de douilles (7) de montage par emmanchement des tubes en laiton (1) ou autres, des éléments de support (8) pour une fixation murale étant également montés sur les longerons (2) sur leur face ou leur génératrice tournée vers le mur, et en ce que les douilles (5 et 7) sont avantageusement fixées chacune par vissage d'une portion filetée de diamètre réduit (5', 7') dans un taraudage correspondant des bouchons (4) ou des longerons (2), avec interposition d'un joint torique (11), ce vissage étant complété par un collage.

2. Radiateur, suivant la revendication 1, caractérisé en ce que les douilles (5 et 7) présentent, sur leur partie en saillie des bouchons (4) ou des longerons (2), des gorges parallèles (12) permettant, d'une part, le logement de joints toriques (13) d'étanchéité entre les tubes (6 ou 1) et les douilles (5 ou 7) et, d'autre part, un serrage desdits tubes (6 ou 1) sur lesdites douilles par réalisation d'un emboutissage (14) au niveau d'une gorge (12) ou par introduction d'une tige filetée (15), traversant le tube (6) ou les tubes (1), dans une gorge (12).

3. Radiateur, suivant la revendication 2, caractérisé en ce que les tiges filetées (15) de maintien du ou des tubes (6) sur les douilles (5) sont destinées à la fixation d'éléments annexes (16), tels que miroir ou grille sèche-linge, etc..., au moyen de pattes (17), serrés par des boutons (18) ou autres dispositifs de fixation.

4. Radiateur, suivant la revendication 1, caractérisé en ce que les éléments de support (8) pour une fixation murale sont avantageusement constitués sous forme d'un élément cylindrique muni d'une portion filetée de moindre section (8') vissée, avec interposition d'un joint torique (19), dans un perçage taraudé correspondant du longeron (2), cet assemblage par vissage étant bloqué par collage, et pourvu à son extrémité libre d'un perçage borgne (20) de réception d'un insert (21) fixé sur une vis d'ancrage (22) et solidarisé avec l'élément (8) par l'intermédiaire d'une vis pointeau (23) coopérant avec une rainure circulaire (24) dudit insert (21).

5. Radiateur, suivant la revendication 1, caractérisé en ce que le tube (6) est avantageusement cintré afin de relier les extrémités des longerons (2) par emmanchement sur les douilles (5) correspondantes.

6. Radiateur, suivant la revendication 1, caractérisé en ce que ses pièces constitutives présentent des traitements de surface différents ou des couleurs différentes, à savoir sous forme de décoration par traitement galvanique, par traitement d'oxydation, par revêtement de résine époxy ou par un revêtement de peinture.

7. Radiateur, suivant l'une quelconque des revendications 1 et 6, caractérisé en ce que ses pièces constitutives sont assemblées, après traitement de surface.

## Claims

1. A towel rail heater, consisting essentially of tubes (1) mounted between hollow side members (2), the said heater being supplied with any heat-carrying fluid, particularly hot sanitary water, the tubes (1) and the hollow side members (2) being made of brass, or other materials compatible with any heat-carrying fluid, more particularly a sanitary fluid, the heat-carrying fluid being supplied and discharged by means of elements (9) each associated with a bore of two tubes (1) or two side members (2) and welded on the latter, said elements (9) each being provided with an assembly (10) for coupling to a conduit for hot sanitary water or any other heat-carrying fluid, characterized in that the tubes (1) are mounted without welding between the hollow side members (2), in that the side members (2) are advantageously tubes which are closed at their ends by plugs, either ordinary plugs (3) or coupling plugs (4) provided with a socket (5) for mounting another heating tube (6) connecting the ends of the side members (2), and are provided, on their surfaces or on their opposite generatrices, with sockets (7) for mounting brass tubes (1) or the like by fitting the same therein, support elements (8) for wall fixing also being mounted on the side members (2) on their surface or their generatrix facing the wall, and in that the sockets (5 and 7) are advantageously each fixed by screwing a reduced-diameter threaded portion (5', 7') into a corresponding tapped hole in the plugs (4) or side members (2) with the interposition of a toric gasket (11), this screwing being completed by gluing.

2. A heater according to claim 1, characterised in that the sockets (5 and 7) have, on their portion projecting from the plugs (4) or side members (2), parallel grooves (12) whereby, on the one hand, toric gaskets (12) can be accommodated between the tubes (6 or 1) and the sockets (5 or 7) and, on the other hand, said tubes (6 or 1) can be clamped on said sockets by forming an indentation (14) at the level of a groove (12) or by introduction of a threaded rod (15) extending through the tube (6) or the tubes (1) in a groove (12).

3. A heater according to claim 2, characterised in that the threaded rods (15) for retaining the tube or tubes (6) on the sockets (5) are adapted to secure additional elements (16), such as a mirror or clothes-drying grill, etc, by means of feet (17) secured by studs (18) or other fixing means.

4. A heater according to claim 1, characterised in that the support elements (8) for wall fixing are advantageously in the form of a cylindrical element provided with a reduced-section threaded portion (8') screwed, with the interposition of a toric gasket (19), into a corresponding tapped bore in the side member (2), this screwed assembly being secured by gluing, and provided at its free end with a blind bore (20) for receiving an insert (21) fixed on an anchoring screw (22) and secured to the element (8) by means of a needle valve screw (23) co-operating with a circular groove (24) in the said insert (21).

5. A heater according to claim 1, characterised in that the tube (6) is advantageously curved in order that the ends of the side members (2) may be connected by fitting the same on the corresponding sockets (5).

6. A heater according to claim 1, characterised in that its components have different surface treatments or different colours, namely in the form of decoration by electrical treatment, oxidation treatment, coating with epoxy resin or a coat of paint.

7. A heater according to any one of claims 1 and 6, characterised in that its components are assembled after surface treatment.

## Patentansprüche

1. Heizkörper als Trockner für Wäsche, im wesentlichen bestehend aus zwischen Kreuz-Hauptträgern (2) montierten Rohren (1), welche mit einer beliebigen wärmetragenden Flüssigkeit beschickt sind, insbesondere mit heißem Leitungswasser, wobei die Rohre (1) und die Hauptträger (2) aus Messing oder aus anderen, mit der wärmetragenden Flüssigkeit verträglichen Materialien, insbesondere aus Sanitärmaterialien, bestehen und für den Zu- und Abfluß der wärmetragenden Flüssigkeit Zwischenstücke (9) vorgesehen sind, von denen jedes eine Bohrung der beiden Rohre (1) oder der beiden Hauptträger (2) übergreift und jeweils an diesem befestigt ist, wobei jedes der Zwischenstücke (9) eine Verbindungsvorrichtung (10) für eine Leitung für warmes Leitungswasser oder für eine andere wärmetragende Flüssigkeit aufweist, **dadurch gekennzeichnet**, daß die Rohre (1) ohne Löt- oder Schweißverbindung an den Kreuz-Hauptträgern (2) montiert sind, daß die Hauptträger (2) vorteilhafterweise als Rohre ausgebildet sind, welche an ihren Enden mit Verbindungs-Stopfen (3) oder Verschluß-Stopfen (4) verschlossen sind, die eine Hülse (5) zur Montage eines weiteren Heiz-Rohres (6) aufweisen, welches die äußersten Enden der Hauptträger (2) verbindet, und daß am Umfang oder an den Außenflächen der Hauptträger Montagehülsen (7) zum Einsetzen von Messingrohren oder dergleichen vorgesehen sind, daß zur Wandfixierung Halteelemente (8) in gleicher Weise an der Außenfläche oder am Umfang der Hauptträger montiert sind, und daß jede der Hülsen (5, 7) vorteilhafterweise durch eine Schraubverbindung mit einem Gewindeabschnitt (5', 7') mit reduziertem Durchmesser in einem entsprechenden Innengewinde des Stopfens (4) oder der Hauptträger (2) befestigt ist, wobei ein Dichtring (11) zwischengeschaltet ist und die Schraubverbindung durch Klebung vervollständigt ist.

2. Heizkörper nach Anspruch 1, dadurch gekennzeichnet, daß die Hülsen (5, 7) in dem an den Stopfen (4) oder den Hauptträgern (2) anliegenden Außenumfangsbereich parallele Nuten (12) aufweisen, die einerseits zum Abdichten der Rohre (6, 1) und der Hülsen (5, 7) die Aufnahme von Dichtringen (13) und andererseits ein Festklemmen der Rohre (6, 1) auf den Hülsen mittels Einprägung (14) auf das Niveau der Nut (12) oder mittels eines eingesetzten Gewindebolzens (15), welcher das Rohr (6) oder die Rohre (1) im Bereich einer Nut (12) durchsetzt, ermöglichen.

3. Heizkörper nach Anspruch 2, dadurch gekennzeichnet, daß die Gewindebolzen (15), welche das/die Rohr(e) (6) auf der/den Hülsen (5) halten, dazu vorgesehen sind, Anbauelemente (16), wie Spiegel oder Wäsche-Trockengitter usw., mit Hilfe von Halterungen (17), die zwischen Befestigungsknöpfen (18) eingespannt sind, zu fixieren.

4. Heizkörper nach Anspruch 1, dadurch gekennzeichnet, daß die Halteelemente (8) zur Wandbefestigung vorteilhafterweise als zylindrische Elemente ausgebildet sind, welche einen Gewindeabschnitt (8') geringeren Querschnittes aufweisen, der mit einem zwischengeschalteten Dichtring (19) in eine Lochung mit entsprechendem Innengewinde des Hauptträgers (2) eingeschraubt ist, daß diese Verschraubung mit Klebstoff gesichert ist und daß das Halteelement an seinem freien Ende ein Gewindesackloch (20) zur Aufnahme eines an einem Verankerungselement (22) befestigten Halteeinsatzes (21) aufweist, welcher mit dem Halteelement (8) mittels einer Madenschraube (23) verbunden ist, welche in eine Ringnut (24) des Halteeinsatzes (21) eingreift.

5. Heizkörper nach Anspruch 1, dadurch gekennzeichnet, daß das Rohr (6) vorteilharterweise gebogen ist, um die Enden der Hauptträger (2) durch Aufstecken auf entsprechende Hülsen (5) zu verbinden.

6. Heizkörper nach Anspruch 1, dadurch gekennzeichnet, daß ihre wesentlichen Teile zu Dekorationszwecken unterschiedliche Oberflächen oder unterschiedliche Farben aufweisen, die durch Galvanisieren, Oxydationsbehandlung, Epoxyd-Harz-Beschichtung oder durch eine Farbschicht gebildet sind.

7. Heizkörper nach einem der Ansprüche 1 bis 6, dadurch gekennzeichnet, daß die wesentlichen Teile nach der Oberflächenbehandlung zusammengesetzt sind.
